Europäisches Patentamt

(19) European Patent Office

Office européen des brevets

(11) Publication number : **0 291 110 B1**

# EUROPEAN PATENT SPECIFICATION

(45) Date of publication of patent specification :
11.09.91 Bulletin 91/37

(51) Int. Cl.⁵ : **F16H 7/18, F16H 7/24**

(21) Application number : 88200791.7

(22) Date of filing : 25.04.88

(54) Pre-timed distribution unit, in particular for internal combustion engines.

(30) Priority : 06.05.87 IT 2041287

(43) Date of publication of application :
17.11.88 Bulletin 88/46

(45) Publication of the grant of the patent :
11.09.91 Bulletin 91/37

(84) Designated Contracting States :
AT BE CH DE ES FR GB GR LI LU NL SE

(56) References cited :
BE-A- 635 659
FR-A- 2 414 747
FR-A- 2 594 514
GB-A- 2 092 705

(73) Proprietor : SOCIETA' ITALIANA CATENE CALIBRATE REGINA S.p.A.
Corso Magenta 46
I-20123 Milan (IT)

(72) Inventor : Ancarani Restelli, Amedeo
Via Monza 80
I-22052 Cernusco Lombardone Como (IT)

(74) Representative : De Carli, Erberto et al
ING. BARZANO' & ZANARDO MILANO S.p.A.
Via Borgonuovo, 10
I-20121 Milano (IT)

## Description

The present invention relates to a pre-timed distribution unit, in particular for internal combustion engines.

Distribution units for internal combustion engines known from the prior art (GB-A-2092705) are constituted by a pair of sprocket wheels connected to rotate in phase by a transmission chain, associated with chain tightener and/or flapping-preventing means, which are constituted by guide shoes.

Distribution units of pre-timed type have already been developed (EP-A-0280365, not pre-published) which achieve their purposes thanks to guide shoes constituted by two half-guide shoes, which are joined to each other side-by-side the space existing between the sprocket wheels and the branches of the chain which links them.

The overall dimensions of said units, although small, are not yet small enough to allow said units to be generally applied to all engine types. The above drawback penalizes in particular the distribution units of engines equipped with a multiple-strand link chain, wherein the problem of the overall dimensions is already particularly felt.

The purpose of the present invention is to overcome the above drawbacks by providing a pre-timed distribution unit having further reduced overall dimensions and improved functionality as well as reduced costs of manufacturing and assemblage.

Such purpose is achieved by a pre-timed distribution unit having the features claimed in claim 1.

The invention is disclosed in the following in greater detail, with the aid of the drawings, which depict two exemplifying forms of practical embodiment thereof.

Figure 1 shows a partially sectional front view of a distribution unit according to the present invention, wherein the front toothed ring is only partially shown.

Figure 2 shows a sectional view according to path II-II of Figure 1.

Figure 3 shows a front view of an alternative form of practical embodiment of the present invention, depicted according to the same modalities as Figure 1.

Figure 4 shows a sectional view according to path IV-IV of Figure 3.

Figure 5 shows a partial sectional view according to path V-V of Figure 3.

Referring to the above mentioned Figures, a pre-timed distribution unit, generally indicated by the reference numeral 1 — and simply referred to, in the following, as the "unit"— comprises a driving sprocket wheel 2 and a driven sprocket wheel 3, each with two toothed rings axially spaced apart, as well as a multiple-strand link chain 4 taut between and around the sprocket wheels 2, 3, and a guide shoe 5.

The guide shoe 5 is constituted by a contoured, plate-shaped element, and comprises a pair of guide portions 6, which support and guide the chain 4, radiused by a first arcuate edge 7 and a second arcuate edge 8 respectively mating with recessed hub portions 13 and 18 of the sprocket wheels 2 and 3 provided between adjacent toothed rings thereof.

Each guide portion 6 has two free ends respectively indicated by the reference numerals 9 and 10 and mating with the recessed hub portions 13, 18.

The ends 9 are extended in such a way that at least one of the arcuate edges 7, 8 extends over an arc slightly greater than that of a half-circle. Such an extension is allowed by the fact that the distance, indicated by the letter "g" in the Figures, existing between the bottom 11 of the teeth of the toothed rings 12 and the bottom of the recessed hub portions 13, 18 of the hubs 14, 19 of the sprocket wheels 2, 3 is greater than the thickness of the guide portions 6 in the proximity of the ends 9, 10 thereof, said thickness being equal to the distance between the inside edges of the link plates of the chain 4 and the bottom of the recessed hub portions 13, 18.

In order to make it easier to assemble the guide shoe 5, the ends 9 and 10 can be made in such a way that they tangentially mate with the inside edges of the link plates of the chain 4.

The guide shoe 5 is furthermore provided with a weight-reducing opening 15, having edges 16, 17 respectively radiused, and parallel to the corresponding edges of the guide portions 6, and the arcuate edges 7 and 8.

In order to assemble the unit 1, it is enough to position the first sprocket wheel 2 in phase with the second sprocket wheel 3, and spaced apart from this latter by the guide shoe 5.

The edges 7 and 8 of the guide shoe 5 enter between the space existing between two adjacent toothed rings, mating with the recessed portions 13 and 18 of the hubs 14 and 19 of the sprocket wheels 2 and 3.

The chain 4 is closed around the elements 2, 3, 5, determining the stable, ultimate and pre-timed configuration of the unit, ready to be assembled on the relevant engine. The guide shoe 5 is totally contained inside the space bounded by the sprocket wheels 2, 3 and by the branches of the chain 4, which said guide shoe mates with, through the pair of guide portions 6, performing an action of support, guide, and flapping-prevention.

The action of the guide portions 6 is particularly efficacious thanks to their configuration, which allows the ends 9 and/or 10 to continue to mate with the chain 4 until this latter has already started to inmesh, at one side, and to leave, at the other side, the teeth of the sprocket wheels 2 and 3.

In case the transmission unit 1 comprises sprocket wheels 2 and 3 with a plurality of toothed rings higher than two and a corresponding multiple-strand link chain 4, a plurality of guide shoes 5, all identical to one another, can be used.

Their number may be equal to the number of toothed rings, decreased by one, so that each guide shoe 5 is arranged in a respective one of the recessed hub portions 13, 18 of the sprocket wheels 2, 3. The guide shoes 5 can be mutually constrained, or not, in the axial direction of the sprocket wheels 2, 3 in such a way as to constitute a multiple guide shoe, not shown in the Figures, for the sake of simplicity.

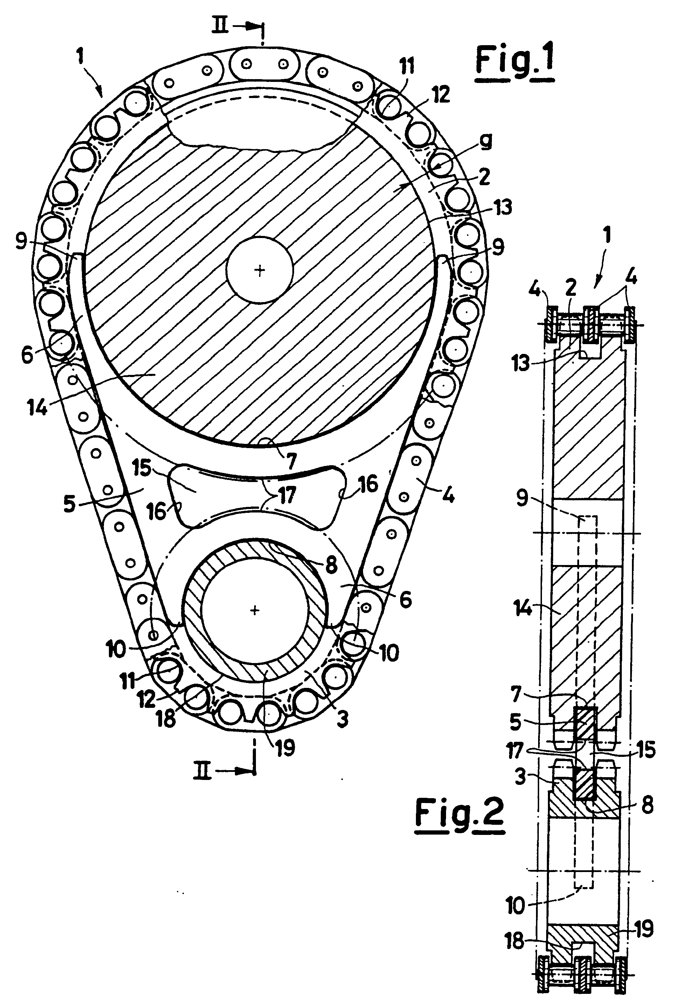

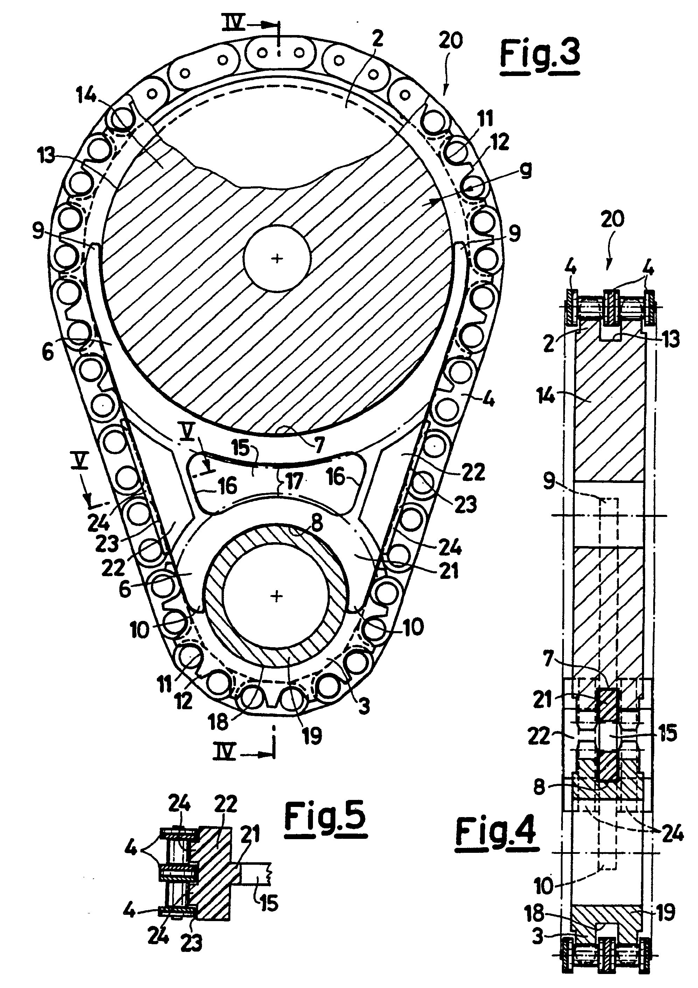

In an alternative form of practical embodiment depicted in Figures 3, 4 and 5, wherein the indentical elements have been indicated by the same reference numerals as in Figures 1 and 2, the distribution unit of the invention, now generally indicated by the reference numeral 20, is still constituted by a first sprocket wheel 2 and a second sprocket wheel 3 linked by a multiple-strand link chain 4 and a guide shoe 21.

The guide shoe 21, differently from the guide shoe 5, has a pair of opposite enlarged portions 22 positioned along the sides of each guide portion 6. Each enlarged portion 22 defines, with the same guides portion 6, an outside surface 23 mating with the two branches of the chain 4, but not laterally protruding beyond the outer contour thereof.

Each surface 23 can be provided with protrusions 24 entering between the link plates of the chain 4 and mating with rollers arranged between the link plates of the chain 4.

In case of distribution units similar to that indicated by the reference numeral 20, but with sprocket wheels with more than two toothed rings (not shown in the Figures), what already said for unit 1 holds true. In particular, the enlarged portions 22 can be advantageously used as a constraint element between the various guide shoes 20, it being understood that the outermost enlarged portions may constitute a simple support element for the chain 4.

The advantages offered by such a unit can be summarized as follows :

— Low cost of manufacturing, thanks to the simple structure, easily reproducible and associatable to other identical structures in case the unit has sprocket wheels with more than two toothed rings ;

— Low assemblage cost, because the unit can be composed and obtained in a pre-timed, stable and ultimate manner with no need of using further mechanical elements different from the sprocket wheels, the guide shoes, and the chain ;

— Operation fluidity, with the total absence of flapping due, in particular, to the shape of the ends of the guide portions 6, which can be so extended, as to mate with the chain 4 up to the points wherein this latter has already started to inmesh with, at one side, and to leave, at the other side, the teeth of the sprocket wheels 2 and 3 ;

— True possibility of using the unit in a whatever engine, because the relevant guide-shoe is totally contained inside the space bounded by the sprocket wheels 2 and 3, and by the chain 4.

## Claims

1. Pre-timed distribution unit, in particular for internal combustion engines, comprising a driving sprocket wheel (2) and a driven sprocket wheel (3) each having at least two axially spaced apart toothed rings (12), and a multiple-strand link chain (4) taut between and around said sprocket wheels (2, 3), and a guide shoe (5, 21) for guiding the chain (4) between said sprocket wheels (2, 3), said sprocket wheels (2, 3) each having a recessed hub portion (13, resp. 18) between adjacent toothed rings (12) and said guide shoe (5, 21) comprising at least one plate-like element having positioning arcuate edges (7, 8) respectively mating with said recessed hub portions (13, 18) of said sprocket wheels (2, 3) and a pair of guide portions (6) for guiding said multiple-strand chain (4).

2. Pre-timed distribution unit according to claim 1, characterized in that said guide portions (6) each have two protruding ends (9, 10) mating with said recessed hub portions (13, 18), said guide portions (6) having a thickness in the proximity of the ends (9, 10) equal to the distance between the inside edges of the link plates of the chain (4) and the bottom of the recessed hub portions (13, 18).

3. Pre-timed distribution unit according to claim 1, characterized in that at least one of said arcuate edges (7, 8) extends over an arc slightly greater that that of a half-circle.

4. Pre-timed distribution unit according to claim 2, characterized in that the outer surfaces of said ends (9, 10) tangentially mate with the inside edges of the link plates of the chain (4).

5. Pre-timed distribution unit according to claim 1, characterized in that it comprises a plurality of said plate-like elements arranged in respective ones of said recessed hub portions (13, 18).

6. Pre-timed distribution unit according to claim 5, characterized in that each plate-like element is provided with means for constraining the plate like elements in the axial direction of said sprocket wheels (2, 3).

7. Pre-timed distribution unit according to claim 6, characterized in that said constraining means comprise pairs of opposite enlarged portions (22) positioned at said guide portions (6).

8. Pre-timed distribution unit according to claim 7, characterized in that said enlarged portions (22) have an outside surface having protrusions (24) entering between the link plates of the chain (4) and defining guide surfaces for chain rollers arranged between said link plates.

9. Pre-timed distribution unit according to claim 1 or 5, characterized in that (each) said plate-like element has a weight-reducing opening (15).

10. Pre-timed distribution unit according to claim 9, characterized in that said opening (15) has edges (16, 17) extending generally parallel to the corresponding edges of the guide portions (6) and the edges (7, 8) of the plate-like element(s).

**Patentansprüche**

1. Voreingestellte Verteilereinheit, insbesondere für Verbrennungskraftmaschinen, mit einem Antriebszahnrad (2) und einem angetriebenen Zahnrad (3), welche jeweils wenigstens zwei axial in Abstand voneinander angeordnete Ringe (12) mit Zähnen aufweisen, mit einer mehrreihigen Gliederkette (4), welche zwischen den und um die Zahnräder (2, 3) gespannt ist, und mit einem Führungsschuh (5, 21) zur Führung der Kette (4) zwischen den Zahnrädern (2, 3), wobei die Zahnräder (2, 3) jeweils einen abgesetzten Anlagebereich (13 bzw. 18) zwischen benachbarten Ringen (12) mit Zähnen aufweisen und wobei der Führungsschuh (5, 21) wenigstens ein plattenförmiges Element mit gekrümmten Positionierkanten (7, 8), welche jeweils mit den abgesetzten Anlagebereichen (13, 18) der Zahnräder (2, 3) zusammenwirken, und ein Paar von Führungsbereichen (6) zur Führung der mehrreihigen Kette (4) aufweist.

2. Voreingestellte Verteilereinheit nach Anspruch 1, dadurch gekennzeichnet, daß die Führungsbereiche (6) jeweils zwei vorragende Enden (9, 10) aufweisen, welche mit den abgesetzten Anlagebereichen (13, 18) zusammenwirken, wobei die Führungsbereiche (6) eine Dicke nahe den Enden (9, 10) aufweisen, welche gleich dem Abstand zwischen den Innenkanten der Verbindungslaschen der Kette (4) und dem Boden der abgesetzten Anlagebereiche (13, 18) ist.

3. Voreingestellte Verteilereinheit nach Anspruch 1, dadurch gekennzeichnet, daß wenigstens eine der gekrümmten Kanten (7, 8) sich über eine Bogen erstreckt, welcher geringfügig größer als der eines Halbkreises ist.

4. Voreingestellte Verteilereinheit nach Anspruch 2, dadurch gekennzeichnet, daß die Außenflächen der Enden (9, 10) tangential mit den Innenkanten der Verbindungslaschen der Kette (4) zusammenpassen.

5. Voreingestellte Verteilereinheit nach Anspruch 1, dadurch gekennzeichnet, daß sie eine Mehrzahl der plattenförmigen Elemente aufweist, welche jeweils entsprechend in einem der abgesetzten Anlagebereiche (13, 18) angeordnet sind.

6. Voreingestellte Verteilereinheit nach Anspruch 5, dadurch gekennzeichnet, daß jedes plattenförmige Element mit Mitteln zum Halten der plattenförmigen Elemente in axialer Richtung der Zahnräder (2, 3) ausgebildet ist.

7. Voreingestellte Verteilereinheit nach Anspruch 6, dadurch gekennzeichnet, daß die Haltemittel Paare von einander gegenüberliegenden, vergrößerten Abschnitten (22) umfassen, welche an den Führungsbereichen (6) positioniert sind.

8. Voreingestellte Verteilereinheit nach Anspruch 7, dadurch gekennzeichnet, daß die vergrößerten Abschnitte (22) mit einer Außenfläche mit Vorsprüngen (24) ausgebildet sind, welche zwischen die Verbindungslaschen der Kette (4) eingreifen und Führungsflächen für die zwischen den Verbindungslaschen angeordneten Kettenrollen definieren.

9. Voreingestellte Verteilereinheit nach Anspruch 1 oder 5, dadurch gekennzeichnet, daß das (jedes) plattenförmige Element eine gewichtsreduzierende Öffnung (15) aufweist.

10. Voreingestellte Verteilereinheit nach Anspruch 9, dadurch gekennzeichnet, daß die Öffnung (15) Kanten (16, 17) aufweist, welche im wesentlichen parallel zu den entsprechenden Kanten der Führungsbereiche (6) und der Kanten (7, 8) des plattenförmigen Elementes verlaufen.

**Revendications**

1. Unité de distribution préréglée, en particulier pour moteurs à combustion interne, comprenant une roue motrice à chaîne (2) et une roue à chaîne menée (3), comportant chacune au moins deux couronnes dentées axialement espacées (12), et une chaîne de liaison multi-brins (4) tendue entre et autour desdites roues à chaîne (2-3) et un sabot de guidage (5-21) pour guider la chaîne 4 entre lesdites roues à chaîne (2-3), ces roues à chaîne (2-3) comportant chacune une partie de moyeu évidée (13, respectivement 18) entre des couronnes dentées adjacentes (12) et ledit sabot de guidage (5-21) comprenant au moins un élément en forme de plaque comportant des arêtes de positionnement en forme d'arc (7-8) s'adaptant respectivement auxdites parties de moyeu évidées (13-18) desdites roues à chaîne (2-3) et une paire de portions de guidage (6) pour guider ladite chaîne multi-brins (4).

2. Unité de distribution préréglée selon la revendication 1 caractérisée en ce que lesdites portions de guidage (6) comportent chacune deux extrémités en saillie (9-10) s'adaptant auxdites parties de moyeu évidées (13-18), lesdites portions de guidage (6) présentant une épaisseur, à proximité desdites extrémités (9-10) égale à la distance entre les arêtes intérieures des plaques de liaison de la chaîne 4 et le fond des parties de moyeu évidées (13-18).

3. Unité de distribution préréglée selon la revendication 1 caractérisée en ce que l'une au moins desdites arêtes en forme d'arc (7-8) s'étend sur un arc légèrement plus grand qu'un demi cercle.

4. Unité de distribution préréglée selon la revendication 2 caractérisée en ce que les surfaces extérieures desdites extrémités (9-10) s'adaptent tangentiellement aux arêtes intérieures des plaques de liaison de la chaîne (4).

5. Unité de distribution préréglée selon la revendication 1 caractérisé en ce qu'elle comprend une pluralité desdits éléments en forme de plaque chacun disposé respectivement dans l'une des parties de moyeu évidées (13-18).

6. Unité de distribution préréglée selon la revendicaiton 5 caractérisée en ce que chacun des éléments en forme de plaque est pourvu de moyens pour maintenir lesdits éléments en forme de plaque dans la direction axiale desdites roues à chaîne (2-3).

7. Unité de distribution préréglée selon la revendication 6 caractérisée en ce que lesdits moyens de maintien comprennent des paires de portions agrandies opposées (22) positionnées sur lesdites portions de guidage (6).

8. Unité de distribution préréglée selon le revendication 7 caractérisée en ce que lesdites portions agrandies (22) présentent une surface extérieure munie de saillies (24) pénétrant entre les plaques de liaison de la chaîne (4) et délimitant des surfaces de guidage pour des roues à chaîne disposées entre lesdites plaques de liaison.

9. Unité de distribution préréglée selon la revendication 1 ou 5 caractérisée en ce que chacun desdits éléments en forme de plaque présente une ouverture (15) pour en réduire le poids.

10. Unité de distribution préréglée selon la revendication 9 caractérisée en ce que ladite ouverture (15) comporte des arêtes (16-17) s'étendant généralement parallèlement aux arêtes correspondantes des portions de guidage (6) et aux arêtes (7-8) du ou des éléments en forme de plaque.

Fig.1

Fig.2

Fig.3

Fig.4

Fig.5